(19) Europäisches Patentamt
European Patent Office
Office européen des brevets

(11) **EP 3 490 121 B1**

(12) **EUROPEAN PATENT SPECIFICATION**

(45) Date of publication and mention
of the grant of the patent:
**29.09.2021 Bulletin 2021/39**

(51) Int Cl.:
*H02K 7/104* (2006.01)    *H02K 49/04* (2006.01)
*H02K 7/18* (2006.01)    *B62J 6/06* (2006.01)
*H02K 21/14* (2006.01)

(21) Application number: **17831061.1**

(22) Date of filing: **19.07.2017**

(86) International application number:
**PCT/JP2017/026167**

(87) International publication number:
**WO 2018/016545 (25.01.2018 Gazette 2018/04)**

(54) **ROTARY MOTOR AND NON-CONTACT GENERATOR**

DREHMOTOR UND KONTAKTFREIER GENERATOR

MOTEUR ROTATIF ET GÉNÉRATEUR SANS CONTACT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.07.2016 JP 2016142820**

(43) Date of publication of application:
**29.05.2019 Bulletin 2019/22**

(73) Proprietor: **Nabtesco Corporation
Tokyo 102-0093 (JP)**

(72) Inventors:
• **FLANKL, Michael**
**Zurich 8092 (CH)**
• **TUEYSUEZ, Arda**
**Zurich 8092 (CH)**
• **KOLAR, Johann W.**
**Zurich 8092 (CH)**

• **TSUKADA, Yusuke**
**Kobe-shi**
**Hyogo 651-2271 (JP)**
• **NAKAMURA, Kazuhito**
**Kobe-shi**
**Hyogo 651-2271 (JP)**

(74) Representative: **Grünecker Patent- und
Rechtsanwälte
PartG mbB
Leopoldstraße 4
80802 München (DE)**

(56) References cited:
WO-A1-2012/101938    JP-A- 2011 254 618
JP-A- 2011 254 618    JP-A- 2014 073 076
US-A1- 2013 328 429    US-A1- 2014 085 914
US-A1- 2014 346 777

## Description

### TECHNICAL FIELD

The present invention relates to a rotary electric machine that rotates without contact and a non-contact power generator that generates power without contact.

### BACKGROUND

A bicycle dynamo that generates electricity without contact is disclosed in the United States Patent Application Publication No. 2014/0132155. In a bicycle dynamo of the above publication, an outer peripheral surface of annular permanent magnet that rotates about a rotation axis extending in a direction orthogonal to a rotation axis of a bicycle wheel is spaced apart from a side surface of the wheel that is continuous with an outer peripheral surface of the wheel.
The permanent magnet includes a plurality of magnetic poles arranged circumferentially such that adjacent magnetic poles are magnetized in opposite directions. For example, when the wheel rotates with the N pole of the permanent magnet facing a side surface of the wheel, eddy currents are generated in the side surface of the wheel in such a direction as to hinder the change of the magnetic flux from the permanent magnet. A repulsive force and attractive force between the magnetic flux generated by the eddy current and the magnetic flux from the permanent magnet cause the permanent magnet to rotate in the rotation direction of the wheel.
Thus, when a coil is wound around the permanent magnet and the magnetic flux from the permanent magnet is linked with the coil, it is possible to obtain an induced power from the coil.

### SUMMARY

1. Due to a limited area of the permanent magnet disposed so as to face a side surface of the wheel, the amount of magnetic coupling between the wheel and the permanent magnet cannot be large. Accordingly, eddy currents generated in the wheel are small, and a rotational force of the permanent magnet is weak.

2. In the above publication, a single phase coil is wound around the permanent magnet. With a single phase coil, the magnetic flux from a portion of the permanent magnet around which the coil is not wound cannot be effectively utilized, and thus the amount of the linkage magnetic flux cannot be increased. Moreover, in the case where the polarities of portions of the permanent magnet around which the coil is wound are symmetrical with respect to the rotation axis, the total amount of the magnetic fluxes linked with the coil is constantly canceled out, so that it is not possible to generate electric power.

3. Since the magnetic flux from the permanent magnet propagates in the air, it receives a large magnetic resistance, resulting in a poor magnetic efficiency.

4. Since no yoke is used, the magnetic flux tends to leak. In addition, when an electrically conductive material or a magnetic material is present in the perimeter, a magnetic path is changed by the material, and this may affect the amount of generated power.

5. When the wheel rotates, the permanent magnet may not rotate easily depending on the positions of the magnetic poles of the permanent magnet facing the side surface of the wheel. This is caused by a cogging torque produced between the permanent magnet and the wheel. No measures are taken against the cogging torque in the United States Patent Application Publication No. 2014/0132155 .

US 2014/085914 A1 relates to a contactless generator including a generating module and a magnetic module. The generating module includes an energy converter and a rotator. The rotator has a surface and mechanical energy when rotating and is rotatable relative to the energy converter. The magnetic module is mounted on the surface of the rotator, aligned with the energy converter, and produces a intrinsic magnetic field. The intrinsic magnetic field is subjected to a contactless active force from an external contactless moving metallic object and drives the rotator to rotate. The energy converter converts mechanical energy of the rotator when rotating into electricity by a converting means.
US 2014/346777 A1 relates to an electric apparatus comprising a stator having an array of coils positioned within its periphery and a first rotor having an array of magnet pairs positioned within its periphery. The first rotor has one face adjacent to the stator. A second rotor made of conductive material is positioned adjacent to another face of the first rotor. A coupling mechanism may be connected to the second rotor. The electric apparatus may be connected to an electric power source and act as a motor for driving a mechanical load attached to the coupling mechanism. The electric apparatus may alternatively be connected to an electric load, a turbine being attached to the coupling mechanism for generating electric power. An enclosure may protect components of the electric apparatus against external elements, for example to allow underwater operation.

US 2013/328429 A1 relates to a low cost, high-performance motor unit which has a large capacity obtained without increasing the radial size of the axial gap motor and which can be assembled with improved efficiency; and a dynamo-electric machine and a dynamo-electric machine device which use the motor unit. A motor unit comprises: an in-unit shaft; a stator provided along the circumferential direction of the in-unit shaft; two rotors rotating together with the in-unit shaft and provided so as to face both surfaces of the stator in the circumferential direction; and engagement sections provided to the surface of each of the rotors which is on the side opposite the stator. Such motor units are engaged with each other at the engagement sections and rotate integrally.

The present disclosure is intended to overcome the above drawbacks, and one object thereof is to provide a rotary electric machine and a non-contact power generator having a high magnetic efficiency, less prone to magnetic flux leakage, and provided with measures against the cogging torque.

This object is solved by the subject matter of claims 1 and 5.

It is also possible that the cogging torque canceling unit produces a cogging torque in inverse phase with the cogging torque produced in the first permanent magnet depending on the relative relationship in shape and position between the moving body and the first permanent magnet.

It is also possible that the second rotating body includes an annular member configured to rotate around the first rotational shaft along with the first permanent magnet, and the first magnetic body is disposed on an inner peripheral side of the annular member and configured to reduce the cogging torque by adjusting a gap between the first magnetic body and an inner peripheral surface of the annular member.

It is also possible that the rotary electric machine further comprises one or more coils arranged at such positions as to be linked with magnetic flux from the permanent magnet, the one or more coils producing an induced current according to an amount of change of the magnetic flux linked with the one or more coils.

The present disclosure provides a rotary electric machine and a non-contact power generator having a high magnetic efficiency, less prone to magnetic flux leakage, and provided with measures against the cogging torque.

## BRIEF DESCRIPTION OF THE DRAWINGS

Fig. 1 is an exploded perspective view of a non-contact power generator 1 including a rotary electric machine according to an embodiment of the present invention.

Fig. 2 is a sectional view of the non-contact power generator of Fig. 1 .

Fig. 3 is an exterior view of a first rotating body constituted by a first permanent magnet.

Fig. 4 illustrates the principle of rotation of the first rotating body caused by eddy currents generated in a side surface of a moving body.

Fig. 5 is a block diagram of the non-contact power generator according to the embodiment.

Fig. 6 is a graph showing a cogging torque for one rotation of the first rotating body.

Fig. 7 illustrates a result of two-dimensional FEM simulation on a power generator including a second rotating body and a stator.

Fig. 8A is a plan view showing a structure before optimizing a gap between the stator and the second rotating body.

Fig. 8B is a plan view showing a structure after optimizing the gap.

Fig. 9 shows parameters set for producing the structure of Fig. 8B by simulation.

Fig. 10 is a flow chart showing an algorithm for optimizing the gap between distal ends of teeth of the stator and the second rotating body.

Fig. 11 is a diagram with an abscissa indicating widths and intervals of three teeth arranged in the circumferential direction of the stator and an ordinate indicating the gap between distal ends of the teeth and the second rotating body.

Fig. 12 shows comparison of geometry parameters between initial values and optimized values thereof.

Fig. 13 shows variation of the cogging torque during optimization.

Fig. 14 shows comparison between the cogging torque of the first rotating body and the cogging torque of the second rotating body obtained finally.

Fig. 15A shows an example arrangement not according to the invention in which a yoke is disposed such that the yoke and the moving body are in point symmetry with respect to the first rotating body.

Fig. 15B shows an example arrangement not according to the invention in which a yoke is disposed such that the yoke and the moving body are in point symmetry with respect to the first rotating body.

Fig. 16A shows an example arrangement not according to the invention in which almost all the region of the first rotating body overlaps the yoke except for the portion thereof overlapping the moving body.

Fig. 16B shows an example arrangement not according to the invention in which a plurality of yokes are disposed at positions optimized so as to cancel out the cogging torque.

Fig. 17 schematically illustrates an example not according to the invention.

Fig. 18A shows a first example of the rotary electric machine not according to the invention that can have a cogging torque canceling unit mounted thereto.

Fig. 18B shows a second example of the rotary electric machine not according to the invention that can have a cogging torque canceling unit installed thereto.

## DESCRIPTION OF THE EMBODIMENT

An embodiment of the present invention will now be described in detail with reference to the drawings.

< Embodiment >

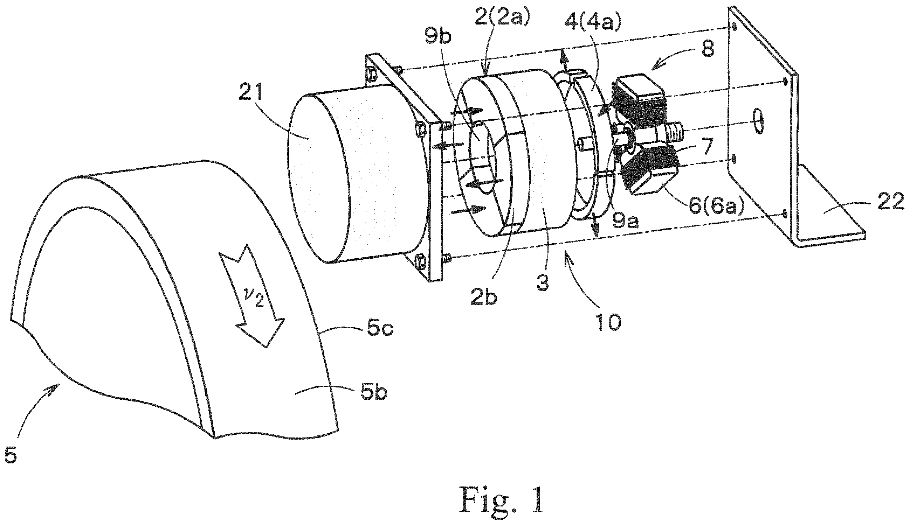

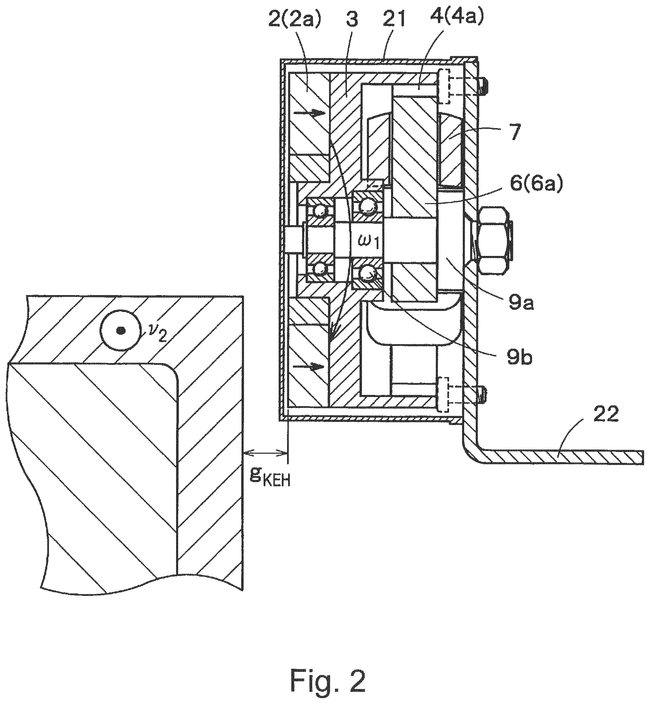

Fig. 1 is an exploded perspective view of a non-contact power generator 1 including a rotary electric machine 10 according to an embodiment, and Fig. 2 is a sectional view of the non-contact power generator 1 of Fig. 1 .
As shown in Figs. 1 and 2, the non-contact power generator 1 according to the embodiment includes: a first rotating body 2 constituted by a first permanent magnet 2a; a rotor 3; a second rotating body 4; a stator 6; and a coil 7. The first rotating body 2, the rotor 3, and the second rotating body 4 constitute a rotary electric machine 10, and the second rotating body 4 and the stator 6 constitute a cogging torque canceling unit 8.
The first rotating body 2 is rotatable around a rotational shaft 9a. A bearing 9b is disposed around the rotational shaft 9a, such that the rotational shaft 9a rotates clockwise or counterclockwise in accordance with the direction of the rotation of a moving body 5.
The first permanent magnet 2a of the first rotating body 2 includes a plurality of magnetic poles 2b arranged circumferentially. Fig. 1 shows an example in which the first permanent magnet 2a has four magnetic poles 2b, but the number of magnetic poles 2b can be two or more, not limited to four.
The first rotating body 2 is opposed at a distance to a main surface of the moving body 5 that rotates or moves. In the example shown in Figs. 1 and 2, the moving body 5 is rotated around the central axis thereof, but it is also possible that the moving body 5 is translated.

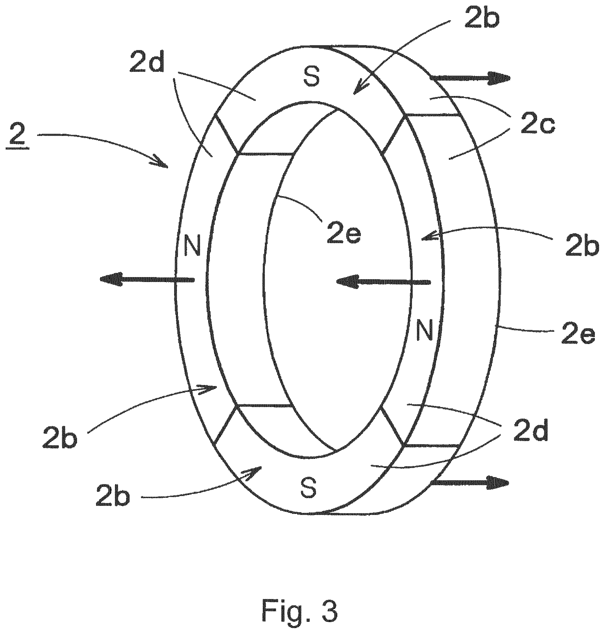

Fig. 3 is an exterior view of the first rotating body 2 constituted by the first permanent magnet 2a. The rotational shaft 9a of the first rotating body 2 is parallel with the rotational axis of the moving body 5, and at least a part of a first side surface 2d of the first rotating body 2 that is continuous to an outer peripheral surface 2c thereof is opposed to a side surface 5c of the moving body 5 that is continuous to an outer peripheral surface 5b thereof. More specifically, two or more of the plurality of magnetic poles 2b included in the first rotating body 2 are opposed to the side surface 5c of the moving body 5. Thus, as will be described later, the amount of magnetic coupling between the first rotating body 2 and the moving body 5 can be increased, and eddy currents generated in the side surface 5c of the moving body 5 can be increased.

Examples of the moving body 5 include a wheel of a vehicle. The moving body 5 generates eddy currents in the side surface 5c opposed to the first rotating body 2. To generate the eddy currents, at least the side surface 5c of the moving body 5 needs to be formed of an electrically conductive material such as a metal.

In the embodiment, the eddy currents are generated in the side surface 5c of the moving body 5 by the magnetic flux from the magnetic poles 2b of the first permanent magnet 2a constituting the first rotating body 2. Therefore, the distance between the first side surface 2d of the first rotating body 2 and the side surface 5c of the moving body 5 is limited to a range within which the magnetic flux from the magnetic poles 2b of the first rotating body 2 can reach the moving body 5.

The magnetic poles 2b of the first permanent magnet 2a are magnetized in the direction toward the side surface 5c of the moving body 5 or the direction opposite thereto. The adjacent magnetic poles 2b of the first permanent magnet 2a are magnetized in opposite directions. In Fig. 3, the directions of magnetization of the magnetic poles 2b of the first permanent magnet 2a are indicated by arrows. As shown in Fig. 3, the first side surface 2d of the first rotating body 2 includes N-poles and S-poles alternating circumferentially. In a side surface 2e of the first rotating body 2 opposite to the first side surface 2d facing the moving body 5, the polarities are opposite to those in the first side surface 2d.

As shown in Fig. 2, the first rotating body 2, the rotor 3, the second rotating body 4, and the stator 6 are covered by a cover 21. The stator 6 is fixed on a mounting plate 22. The cover 21 and the mounting plate 22, which are not essential components, may have any desired shape and size.

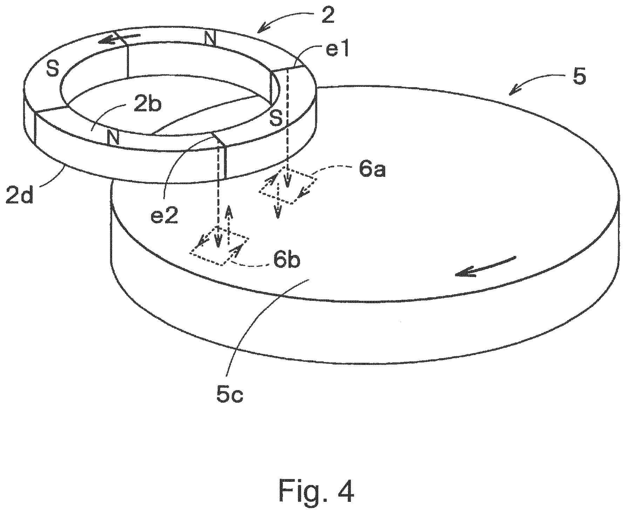

Fig. 4 illustrates the principle of rotation of the first rotating body 2 caused by eddy currents 5d, 5e generated in the side surface 5c of the moving body 5. Among the plurality of magnetic poles 2b arranged circumferentially on the first side surface 2d of the first rotating body 2, the magnetic poles 2b opposed to the side surface 5c of the moving body 5 produce magnetic flux that propagates toward the side surface 5c of the moving body 5. The magnetic flux from the magnetic poles 2b of the first rotating body 2 propagates through an air gap between the first side surface 2d of the first rotating body 2 and the side surface 5c of the moving body 5.

When the moving body 5 rotates, eddy currents are generated in the side surface 5c of the moving body 5 in such a direction as to hinder a change of the magnetic flux from the first rotating body 2. The first rotating body 2 is rotated by the interaction (the repulsive force and the attractive force) between the magnetic flux produced by the eddy currents and the magnetic flux from the first rotating body 2. The surface speed of the first side surface 2d of the first rotating body 2 is lower than the surface speed of the side surface 5c of the moving body 5 opposed thereto.

For example, when an N-pole of the first rotating body 2 is opposed to the side surface 5c of the moving body 5, the direction of the eddy current 5d generated in the side surface 5c of the moving body 5 at a portion reached by the magnetic flux from an edge e1 of the N-pole at the front in the rotational direction is different from the direction of the eddy current 5e generated in the side surface 5c of the moving body 5 at a portion reached by the magnetic flux from an edge e2 of the N-pole at the rear in the rotational direction. The eddy current 5e generated by the magnetic flux from the edge e2 of the N-pole at the rear in the rotational direction flows in such a direction as to produce magnetic flux in an opposite direction than the magnetic flux from the N-pole. On the other hand, the eddy current 5d generated in the side surface 5c of the moving body 5 at a portion reached by the magnetic flux from the edge e1 of the N-pole at the front in the rotational direction flows in such a direction as to produce magnetic flux in the same direction as the magnetic flux from the N-pole. The eddy currents 5d, 5e flow in such a direction as to hinder a change of the magnetic flux from the first rotating body 2 caused by the rotation of the moving body 5.

As described above, on the edge e1 side of the N-pole of the first rotating body 2 at the front in the rotational direction, the direction of the magnetic flux produced by the eddy current 5d is the same as the direction of the magnetic flux from the N-pole of the first rotating body 2, and therefore, an attractive force acts therebetween. On the other hand, on the edge e2 side of the N-pole of the first rotating body 2 at the rear in the rotational direction, the direction of the magnetic flux produced by the eddy current 5e is opposite to the direction of the magnetic flux from the N-pole of the first rotating body 2, and therefore, a repulsive force acts therebetween. When the surface speed of the first side surface 2d of the first rotating body 2 is lower than the surface speed of the side surface 5c of the moving body 5 opposed thereto, the above-described relationship between the first rotating body 2 and the eddy currents 5d, 5e holds true at all time. Thus, the first rotating body 2 rotates at a surface speed lower than the surface speed of the side surface 5c of the moving body 5 opposed thereto, so as to run after the moving surface of the side surface 5c of the moving body 5 opposed thereto.

The above principle of rotation of the first rotating body 2 can also be described in terms of a repulsive force and an attractive force based on Lorentz force. As described above, the direction of the eddy current 5d generated by the magnetic flux from the edge e1 of the N-pole of the first rotating body 2 at the front in the rotational direction is opposite to the direction of the eddy current 5e generated by the magnetic flux from the edge e2 of the first rotating body 2 at the rear in the rotational direction, and therefore, a current flows in a constant direction under the N-pole at all time. When the moving body 5 rotates in the direction indicated by the arrow shown in Fig. 4, the currents generated by the eddy currents 5d, 5e are subjected to Lorentz force in the direction opposite to the rotational direction of the moving body 5. Therefore, the first rotating body 2 subjected to the magnetic flux produced by the eddy currents 5d, 5e is rotated by the repulsive force and the attractive force based on Lorentz force, the repulsive force and the attractive force acting in the rotational direction of the moving body 5.

Thus, the first rotating body 2 and the moving body 5 move in the same direction at the opposed surfaces thereof. Therefore, when the first rotating body 2 is opposed to the moving body 5 at a position offset from the rotational axis of the moving body 5, as shown in Fig. 4, the rotational direction of the first rotating body 2 is opposite to the rotational direction of the moving body 5.

As shown in Figs. 1 and 2, the second side surface of the first rotating body 2 opposite to the first side surface 2d thereof is joined to a first side surface of the rotor 3, and a second side surface or the rotor 3 opposite to the first side surface thereof is joined to a first side surface of the second rotating body 4.

All of the first rotating body 2, the rotor 3, and the second rotating body 4 are rotatable around the common rotational shaft 9a. The first rotating body 2, the rotor 3, and the second rotating body 4 rotate integrally around the rotational shaft 9a. The first rotating body 2, the rotor 3, and the second rotating body 4 have either the same or different diameters. In the example shown in Fig. 2, the first rotating body 2 and the rotor 3 have substantially the same diameter, and the second rotating body 4 has a smaller diameter than the rotor 3. Thus, the second rotating body 4 can be housed inside the inner peripheral surface of the rotor 3.

As shown in Figs. 1 and 2, the second rotating body 4 includes a second permanent magnet 4a having a plurality of magnetic poles 2b arranged circumferentially. The second permanent magnet 4a may have any desired number of magnetic poles.

The stator 6 is disposed inside the inner peripheral surface of the second permanent magnet 4a having an annular shape. The stator 6 is stationary and has a plurality of teeth 6a radiating from the center of the second permanent magnet 4a. The stator 6 is made of a magnetic material, and each of the teeth 6a has a coil 7 wound thereon. These coils 7 are arranged at such positions as to be linked with magnetic flux from the second permanent magnet 4a, and configured to produce an induced current according to an amount of change of the magnetic flux linked with the coils 7. An uneven gap is provided between distal ends of the radiating teeth 6a and the inner peripheral surface of the second permanent magnet 4a.

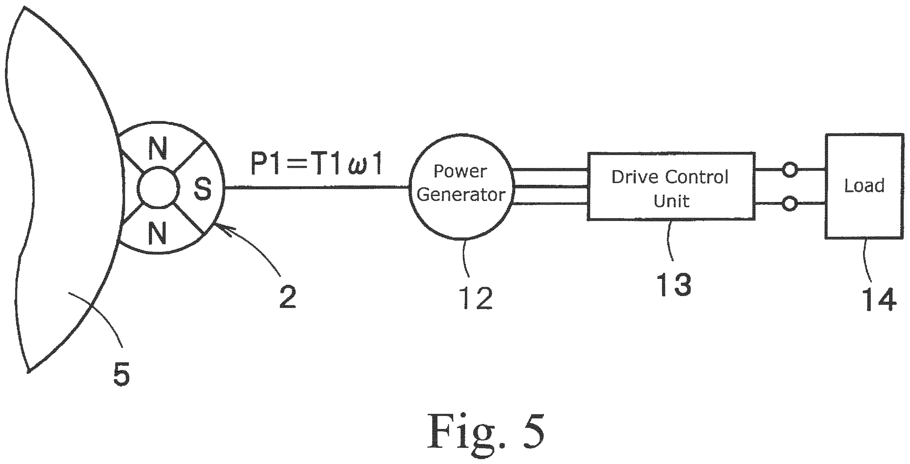

Fig. 5 is a block diagram of the non-contact power generator 1 according to the embodiment. As shown in Fig. 5, the non-contact power generator 1 according to the embodiment includes a kinetic energy harvester (KEH) 11, a power generator 12, a drive control unit 13, and the cogging torque canceling unit 8.

The kinetic energy harvester 11 includes the moving body 5 and the first rotating body 2. In the kinetic energy harvester 11, the moving body 5 moves or rotates to generate eddy currents in a side surface of the moving body 5, and the first rotating body 2 is rotated by the attractive force and the repulsive force between the magnetic flux produced by the eddy currents and the magnetic flux of the first permanent magnet 2a of the first rotating body 2. In this way, the kinetic energy harvester 11 converts the kinetic energy of movement or rotation of the moving body 5 into rotation energy of the first rotating body 2.

The power generator 12 includes the second rotating body 4 and the coils 7 of the stator 6. When the moving body 5 moves or rotates to cause rotation of the first rotating body 2, the second rotating body 4 rotates integrally with the first rotating body 2. The coils 7 wound on the teeth 6a of the stator 6 are linked with alternating magnetic flux that propagates in different directions periodically, and an induced current is generated in the coils 7. In this way, the power generator 12 converts the rotation energy of the first rotating body 2 into the induced current flowing in the coils 7 through the second rotating body 4.

The drive control unit 13 converts the induced current generated in the coils 7 into, for example, an AC voltage or a DC voltage to drive a load 14 that may be configured variously. The load 14 is constituted by any types of motors, actuators, sensors or the like. It is also possible that the drive control unit 13 stores in a capacitor (not shown) a power corresponding to the induced current generated in the power generator 12.

The cogging torque canceling unit 8 includes the second permanent magnet 4a and the stator 6. The cogging torque canceling unit 8 cancels out at least a part of the cogging torque produced in the first permanent magnet 2a depending on the relative relationship in shape and position between the moving body 5 and the first permanent magnet 2a. More specifically, the cogging torque canceling unit 8 cancels out a part of the cogging torque produced in the first permanent magnet 2a by, for example, adjusting the gap between the distal ends of the radiating teeth 6a of the stator 6 and the inner peripheral surface of the second permanent magnet 4a. As will be described later, the cogging torque canceling unit 8 may use other ways to cancel out the cogging torque produced in the first permanent magnet 2a. The term "cancellation" herein indicates that the cogging torque produced in the first permanent magnet 2a by the moving body 5 is canceled out by a cogging torque produced in another member or that the cogging torque produced in the first permanent magnet 2a is reduced.

The cogging torque is produced depending on the relative relationship in shape and position between the moving body 5 and the first permanent magnet 2a of the first rotating body 2, and therefore, the cogging torque is independent of the eddy currents generated in a side surface of the moving body 5. The cogging torque is constant, irrespective of the moving speed of the moving body 5. The cogging torque is produced due to unevenness of the attractive force between the moving body 5 made of a magnetic material and the first permanent magnet 2a of the first rotating body 2. More specifically, since the first permanent magnet 2a of the first rotating body 2 includes a plurality of magnetic poles 2b arranged circumferentially, the attractive force toward the moving body 5 is uneven depending on the rotational angle and the rotational position of the first rotating body 2, and this unevenness causes the cogging torque.

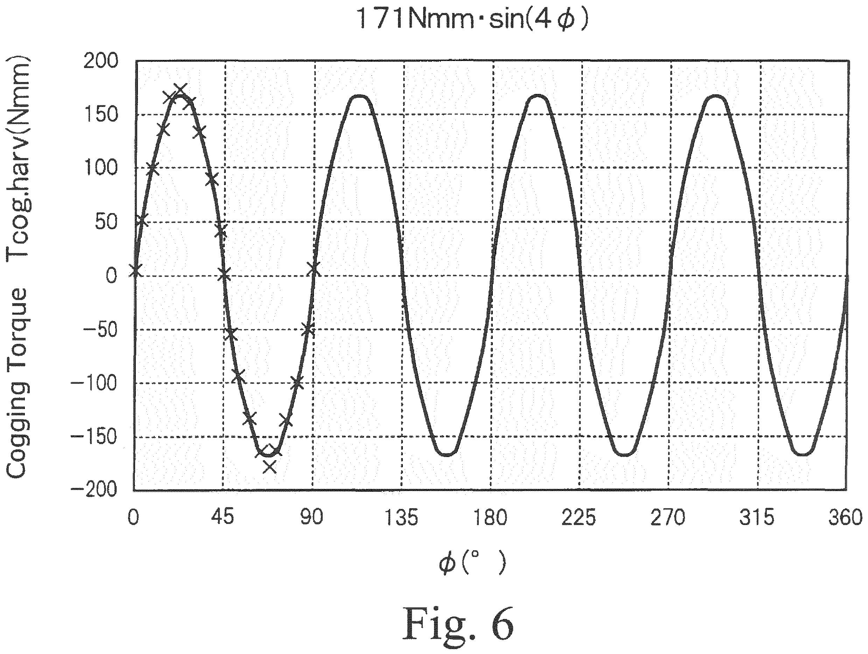

Fig. 6 is a graph showing a cogging torque for one rotation of the first rotating body 2. In Fig. 6, the abscissa indicates the rotational angle $\phi$ (°) of the first rotating body 2, and the ordinate indicates the cogging torque Tcog,harv (Nmm). The graph of Fig. 6 shows an example for the case where the first permanent magnet 2a of the first rotating body 2 includes four magnetic poles 2b having an equal length in the circumferential direction. As can be understood from Fig. 6, the waveform of the cogging torque is based on a 90 degree cycle. When the region of the side surface of the first rotating body 2 overlapping the side surface of the moving body 5 includes the equal proportion of N poles and S poles, the cogging torque is zero. When the proportion of the N poles is maximum or the proportion of the S poles is maximum in the region of the side surface of the first rotating body 2 overlapping the side surface of the moving body 5, the absolute value of the cogging torque is maximum.

The cogging torque is produced not only in the first rotating body 2, but also in the second rotating body 4. The cogging torque of the second rotating body 4 varies depending on the relative relationship in shape and position between the second rotating body 4 and the stator 6.

Ideally, the cogging torque canceling unit 8 completely cancels out the cogging torque Tcog,harv($\phi$) of the first rotating body 2 with the cogging torque Tcog,gen($\phi$) of the second rotating body 4 such that the cogging torque Tcog, harv($\phi$) is zero, as shown in Formula (1) below.

$$\text{Tcog,gen } \phi + \text{Tcog,harv } \phi = 0 \qquad \dots (1)$$

Therefore, the cogging torque Tcog,gen($\phi$) of the second rotating body 4 ideally satisfies the formula: Tcog, gen($\phi$) = -Tcog,harv($\phi$).

Next, operation of the cogging torque canceling unit 8 will be described in detail. A description will be hereinafter given of an example in which the cogging torque of the first rotating body 2 is canceled out by adjusting the gap between the distal ends of the radiating teeth 6a of the stator 6 and the inner peripheral surface of the second permanent magnet 4a.

Formula (2) below shows Fourier expansion of the cogging torque Tcog($\phi$) for analyzing the cogging torque by FEM (Finite Element Method) simulation or analytic derivation.

$$\text{Tcog } \phi = c_1 \sin (4\phi) + d_1 \cos (4\phi) + c_2 \sin (8\phi) + d_2 \cos (8\phi) + \dots \qquad \dots (2)$$

In Formula (2), the symbol $\phi$ represents an rotational angle of the rotor 3. To produce the cogging torque having the waveform shown in Fig. 6 and satisfying Formula (1), the right side of Formula (2) other than the first term need to be zero.

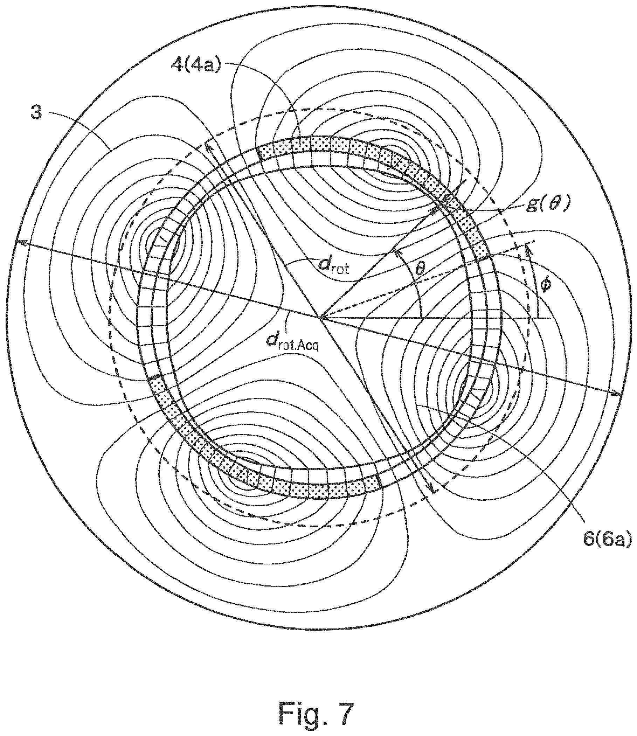

Fig. 7 illustrates a result of two-dimensional FEM simulation on the power generator 12 including the second rotating body 4 and the stator 6. Fig. 7 shows an example in which the gap between the teeth 6a of the stator 6 and the second rotating body 4 is adjusted so as to produce the cogging torque of the second rotating body 4 that can cancel out the cogging torque produced in the first rotating body 2.

The gap g($\theta$) in Fig. 7 is expressed by Formula (3) below.

$$g(\theta) = g_{nom} (1 + a_1 \cos (4\theta)) \qquad \dots (3)$$

The symbol $\theta$ represents an angle of the stator 6 with respect to a predetermined reference direction.

The term in Formula (4) below can be added to Formula (3) to employ the concept of air gap modulation.

$$g(\theta) = g_{nom} \bullet (1 + \sum_{i=1}^{n} a_i \cos(4i\theta) + b_i \sin(4i\theta)) \qquad \dots (4)$$

Formula (4) forms a base for optimizing the air gap. The cogging torque Tcog($\phi$) is consequently expressed

by Formula (5) below.

$$T_{cog}(\varphi) = \sum_{i=1}^{n} c_i \sin(4i\varphi) + d_i \cos(4i\varphi) \qquad \cdots \quad (5)$$

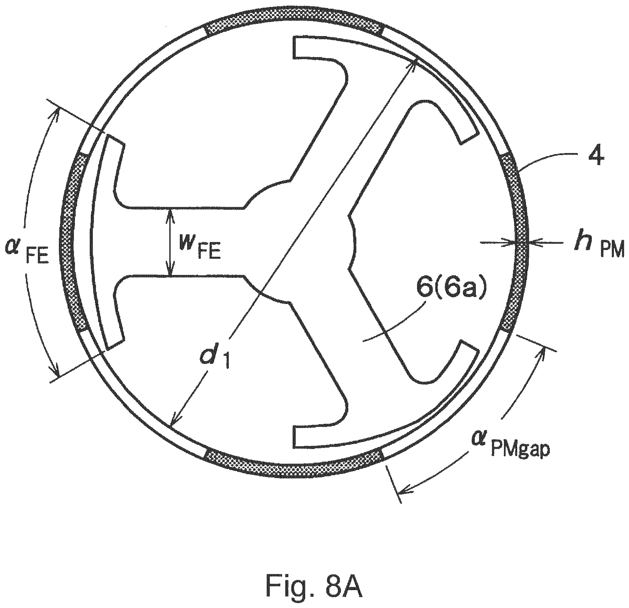

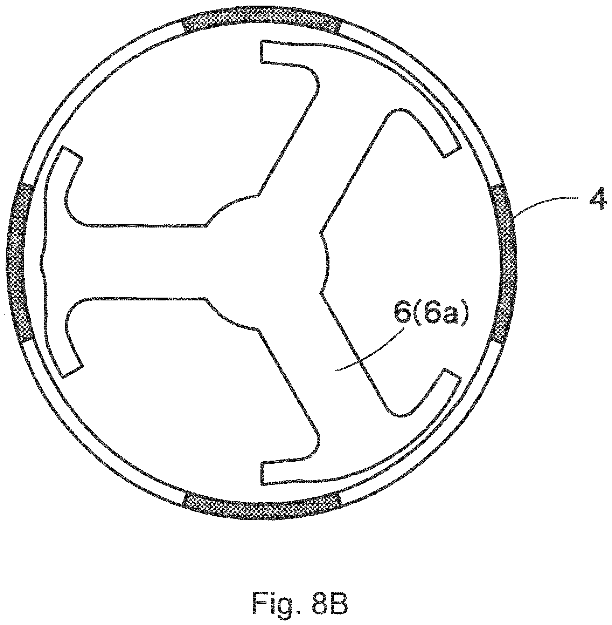

Fig. 8A is a plan view showing a structure before optimizing a gap between the stator 6 and the second rotating body 4, and Fig. 8B is a plan view showing a structure after optimizing the gap. Figs. 8A and 8B illustrate the structure of the stator 6 obtained by simulation. The distal ends of the teeth 6a of the stator 6 shown in Fig. 8B has different shape than that shown in Fig. 8A, and this difference optimizes the gap.

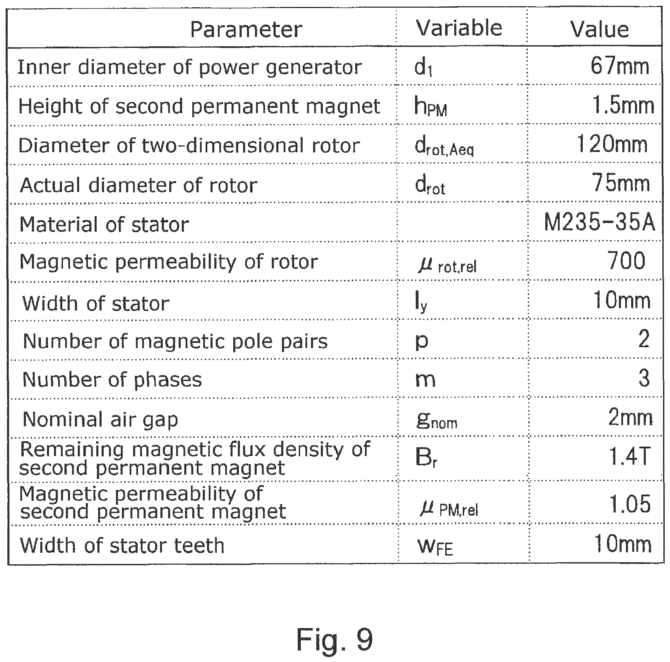

Fig. 9 shows parameters set for producing the structure of Fig. 8B by simulation. The parameters used to calculate the structure of Fig. 8B further include the width $\alpha FE$ of the teeth 6a of the stator 6 and the interval aPMgap between the magnetic poles 2b of the second permanent magnet 4a, in addition to the parameters shown in Fig. 9 .

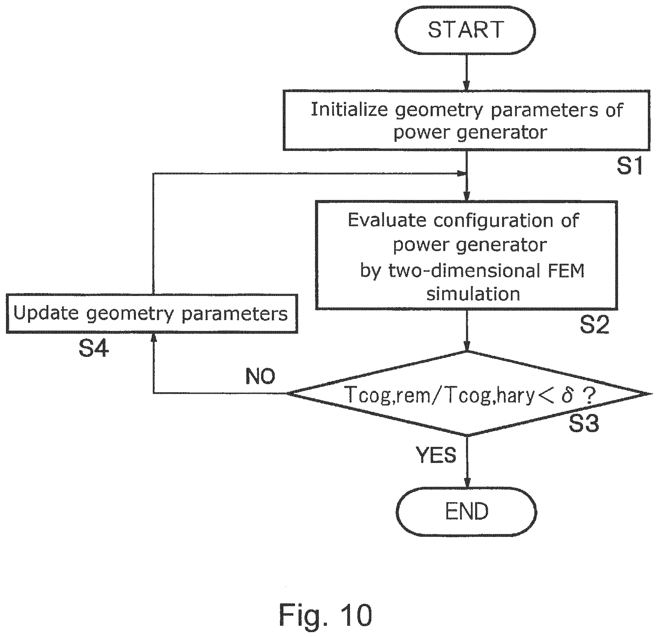

Fig. 10 is a flow chart showing an algorithm for optimizing the gap between the distal ends of the teeth 6a of the stator 6 and the second rotating body 4. The first step is to initialize the geometry parameters of the power generator 12 having a preset shape (step S1). Next, the two-dimensional FEM simulation is performed to calculate the cogging torque as a function of the rotational angle $\phi$, thereby to evaluate the configuration of the power generator 12 (step S2). Subsequently, the geometry parameters are repeatedly updated until a target value of the cogging torque is reached (steps S3, S4).

Due to uncertainty of the simulation, the total cogging torque may not be zero as in Formula (1). Therefore, in step S3, the remainder of the cogging torque Tcog,rem and the rate of the remainder of the cogging torque Tcog,rem / Tcog,harv are calculated in accordance with Formula (6) below.

$$Tcog,rem = Tcog.harv - Tcog.gen \qquad ... (6)$$

In step S3 described above, it is determined whether or not the rate of the remainder Tcog,rem /Tcog,harv is less than $\delta$. By way of an example, $\delta$ is set at 0.1. When $\delta = 0.1$, the total cogging torque can be reduced to 90%. When the determination in step S3 results in NO, the geometry parameters are updated (step S4), and the processing in step S2 and later steps are repeated. When the determination in step S3 results in YES, the processing of Fig. 10 is completed.

The cogging torque Tcog,harv of the first rotating body 2 and the cogging torque Tcog,gen of the second rotating body 4 are functions of the continuous variable $\phi$. Therefore, it is essentially difficult to perform the optimization processing. Thus, the cogging torque is resolved by Formula (5) described above to find a vector c of the high frequency component of the cogging torque shown in Formula (7) below.

$$c = [c_1\ d_1 \cdots c_m\ d_m]^T \qquad ...(7)$$

The cogging torque Tcog,harv of the first rotating body 2 is also resolved in the same manner. As a result, Formula (6) described above can be rearranged into Formula (8) below.

$$c_{rem} = c_{hary} - c_{gen} \qquad ...(8)$$

The geometry parameters of the power generator 12 are favorably represented by a vector a of Formula (9) below.

$$a = [\alpha_{FE}\ \alpha_{PMgap}\ b_1 \cdots a_n\ b_n]^T \qquad ...(9)$$

The modulation coefficient a1 of Formula (3) above is not updated during the optimization and is used as an external geometry parameter. By way of an example, $a_1$ is set at 0.5.

The geometry parameters are updated by the multi-dimensional secant method related to the multi-dimensional Newton-Raphson method. However, in the embodiment, the above secant method is used as an approximation to a Jacobian matrix expressed in Formula (10) below for setting an error function ($c_{rem}$ in this case) at zero.

$$\frac{\partial c_i}{\partial a_j} \approx \bar{J} = \begin{bmatrix} \dfrac{\Delta c_i}{\Delta \alpha_{FE}} & \cdots & \dfrac{\Delta c_i}{\Delta b_n} \\ \vdots & \ddots & \vdots \\ \dfrac{\Delta d_m}{\Delta \alpha_{FE}} & \cdots & \dfrac{\Delta d_m}{\Delta b_n} \end{bmatrix} \quad \cdots (10)$$

For example, to find the first column of the Jacobian matrix of Formula (10), the parameter $\alpha_{FE}$ is made variable for simulation.

The value of the first column of the Jacobian matrix of Formula (10) is set at the difference $c_{gen}$ of the cogging torque resolution of Formula (8) described above. This processing is performed on all the elements of the geometry parameters a thereby to obtain all the elements of the Jacobian matrix.

Next, as expressed in Formula (11) below, the geometry parameters a are repeatedly updated until the remainder crem of the cogging torque is sufficiently small.

$$a_{i+1} = a_i - d_{damping} \bar{J}^+ c_{rem} \quad \cdots (11)$$

As expressed in Formula (12) below, the geometry parameters a are updated using an approximate generalized inverse matrix of the Jacobian matrix. This is because an inverse matrix of the Jacobian matrix may not exist.

$$\bar{J}^+ := \left(\bar{J}^T \bar{J}\right)^{-1} \bar{J}^T \quad \cdots (12)$$

Because of nonlinearity of the optimization problem, a damping element $d_{damping}$ is used in the update processing. For example, when $d_{damping} = 0.2$, a satisfactory convergence result was obtained.

In the embodiment, the optimization of the cogging torque was performed on the threephase outrunner power generator 12. The shape of the stator 6 was optimized in accordance with the flowchart of Fig. 10 to obtain the stator 6 having the structure shown in Fig. 8B.

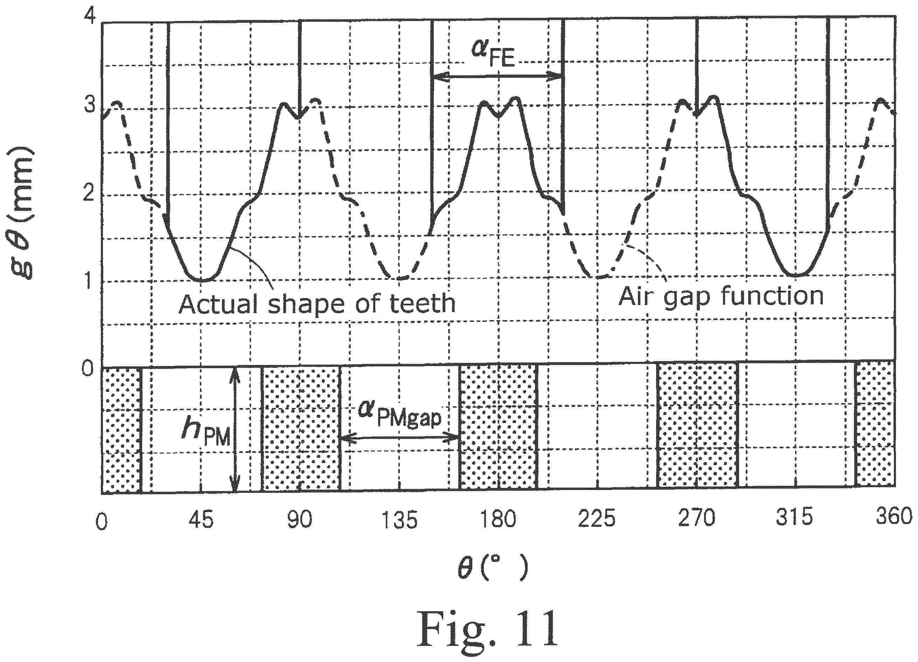

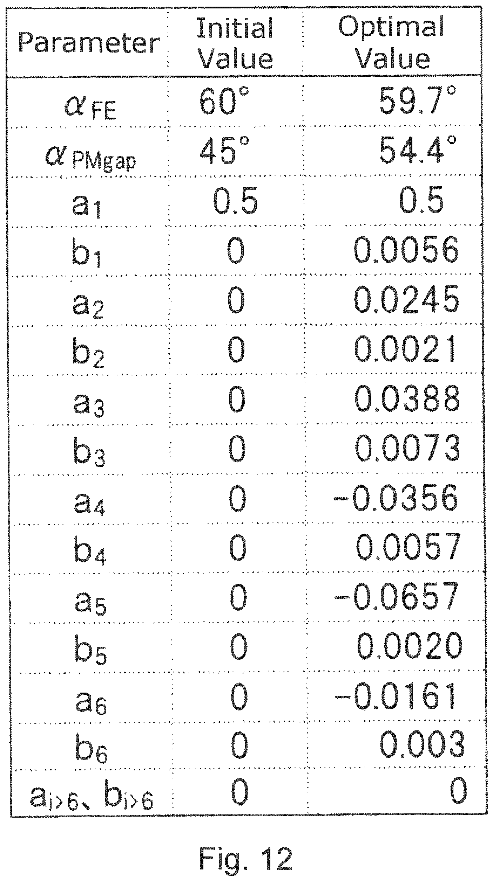

Fig. 11 is a diagram with an abscissa indicating widths and intervals of three teeth 6a arranged in the circumferential direction of the stator 6 and an ordinate indicating the gap between the distal ends of the teeth 6a and the second rotating body 4. While the shape of the stator 6 is changed slightly, the gap ($\alpha_{PMgap}$) between the permanent magnets is increased significantly. Fig. 12 shows comparison of geometry parameters between initial values and optimized values thereof.

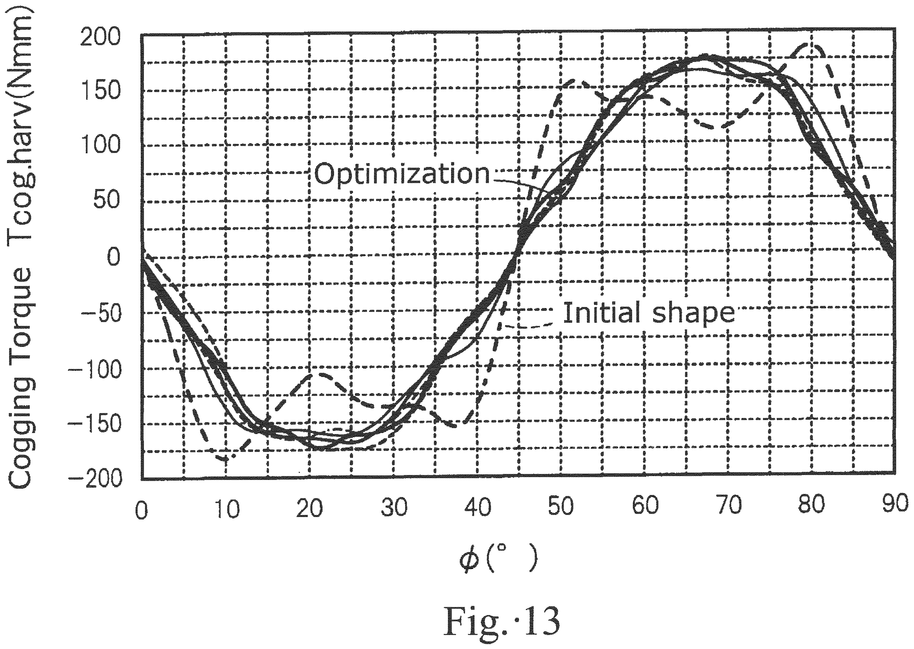

Fig. 13 shows variation of the cogging torque during optimization. As can be understood from Fig. 13, the optimization processing causes the cogging torque to gradually converge into a desired sine wave. With the algorithm of the embodiment, the cogging torque can also be optimized into a desired waveform other than a sine wave.

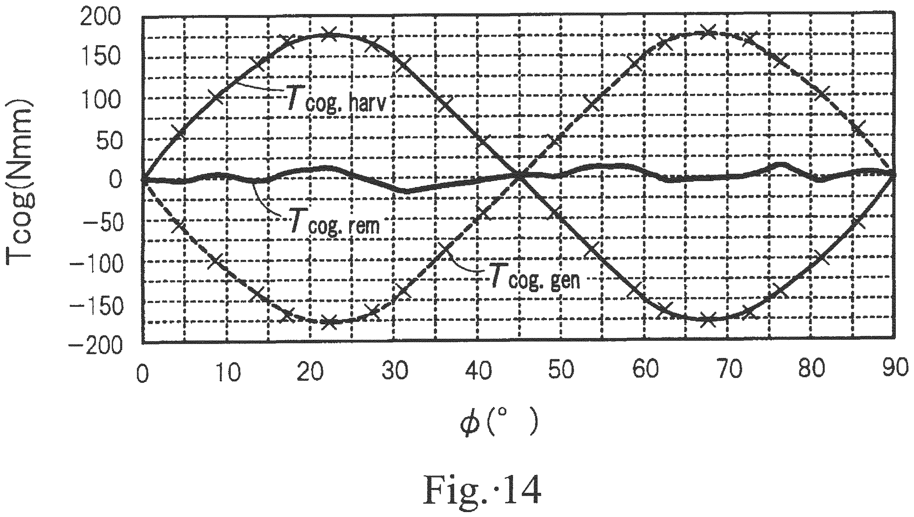

Fig. 14 shows comparison between the cogging torque Tcog,harv of the first rotating body 2 and the cogging torque Tcog,gen of the second rotating body 4 obtained finally by the above-described method. As can be understood from Fig. 14, Tcog,harv and Tcog,gen are in substantially inverse phase, and therefore, the total cogging torque was reduced by about 90%.

As described above, in the embodiment, the first rotating body 2 can be rotated by the attractive force and the repulsive force between the magnetic flux produced by the eddy currents generated in the side surface of the moving body 5 in accordance with movement or rotation of the moving body 5 and the magnetic flux of the first permanent magnet 2a of the first rotating body 2 opposed to the side surface of the moving body 5. Further, in the embodiment, the second rotating body 4 is provided to rotate integrally with the first rotating body 2, and the gap is adjusted between the distal ends of the teeth 6a of the stator 6 disposed on the inner peripheral side of the second rotating body 4 and the inner peripheral surface of the second rotating body 4, so as to produce the cogging torque of the second rotating body 4 in substantially inverse phase with the cogging torque produced by rotation of the first rotating body 2. These two cogging torques cancel out each other and thus the total cogging torque can be reduced to near zero. Thus, when the moving body 5 in a stopped state gradually increases the moving or rotating speed thereof, the first rotating body 2 can be rotated even with a low moving or rotating speed of the moving body 5. The kinetic energy of movement or rotation of the moving body 5 can be efficiently extracted and converted into electric energy, resulting in a high power generation efficiency.

< First example not according to the invention >

In the embodiment described above, the stator 6 and the second rotating body 4 that rotates integrally with the first rotating body 2 are used such that the cogging torque produced in the second rotating body 4 cancels out the cogging torque produced in the first rotating body 2. Specific means for canceling out the cogging torque is not limited to that of the embodiment.

In the first example, the second rotating body 4 and the stator 6 are replaced with a yoke 15 disposed to partially overlap the first rotating body 2, thereby to cancel out the cogging torque produced in the first rotating body 2.

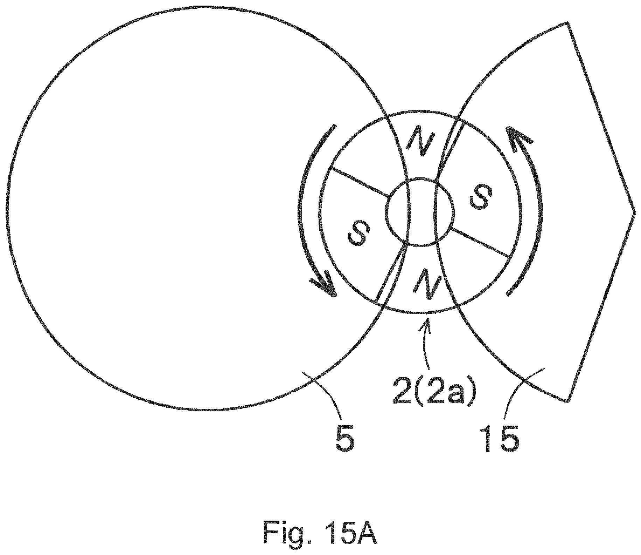

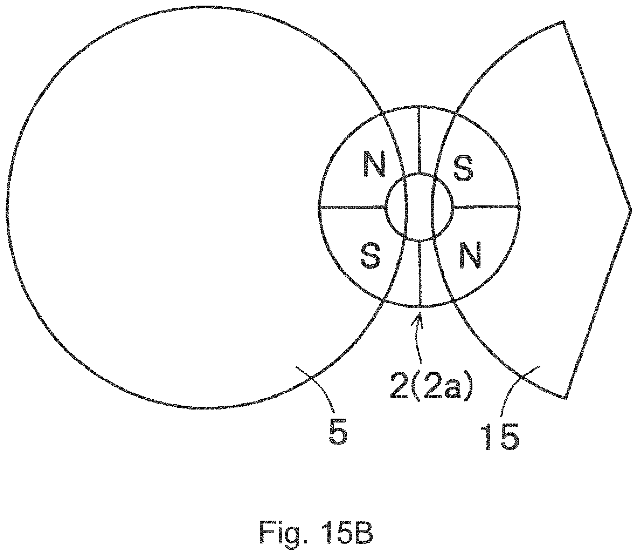

Figs. 15A and 15B schematically illustrates the first example. Figs. 15A and 15B show example arrangements in which the yoke 15 is disposed such that the yoke 15 and the moving body 5 are in point symmetry with respect to the first rotating body 2. In the arrangement shown in Fig. 15A, the region of the first rotating body 2 overlapping the moving body 5 includes a larger area of S pole than N pole, and thus the cogging torque is produced in the counterclockwise direction. Further, the region of the second rotating body 4 overlapping the moving body 5 also includes a larger area of S pole than N pole, and thus the cogging torque is produced in the counterclockwise direction. Therefore, the cogging torque produced in the counterclockwise direction is larger than in the case where yoke 15 is absent. The yoke 15 cannot cancel out the cogging torque of the first rotating body 2.

In the arrangement shown in Fig. 15B, the region of the first rotating body 2 overlapping the moving body 5 includes substantially the same areas of N pole and S pole. Likewise, the region of the second rotating body 4 overlapping the moving body 5 also includes substantially the same areas of N pole and S pole. Therefore, the arrangement of Fig. 15B is in a stable state irrespective of the presence of the yoke 15, and the first rotating body 2 is stably stopped in the state shown in Fig. 15B.

As described above, the yoke 15 disposed as shown in Figs. 15A and 15B cannot cancel out the cogging torque of the first rotating body 2 but hinders rotation of the first rotating body 2.

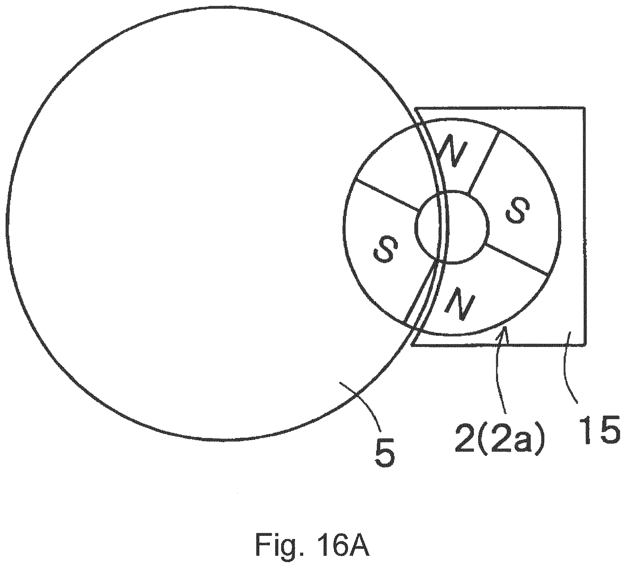

By contrast, Fig. 16A shows an example arrangement in which almost all the region of the first rotating body 2 overlaps the yoke 15 except for the portion thereof overlapping the moving body 5. When the magnetic property, that is, the magnetic permeability of the yoke 15 is the same as that of the moving body 5 and the gap between the first rotating body 2 and the yoke 15 is equal to the gap between the moving body 5 and the first rotating body 2, the magnetic resistance in the magnetic path does not vary in accordance with the rotational angle of the first rotating body 2, and therefore, the cogging torque produced in the first rotating body 2 is reduced. In this example, less cogging torque is produced in the first rotating body 2, rather than the cogging torque produced in the first rotating body 2 by the moving body 5 is canceled.

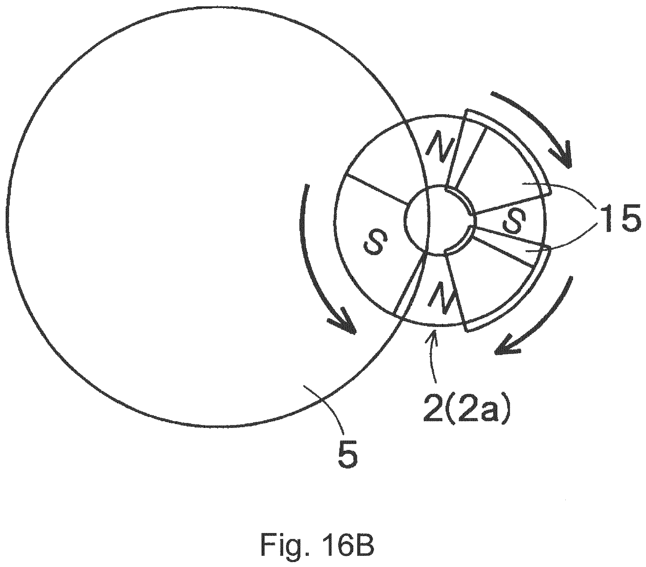

Fig. 16B shows an example arrangement in which a plurality of yokes 15 are disposed at positions optimized so as to cancel out the cogging torque produced in the first rotating body 2 by the moving body 5. The arrangement of Fig. 16B includes two yokes 15. It is preferable to optimize the number, shapes, and magnetic properties such as magnetic permeabilities of the yokes 15. The optimization can be achieved by simulation as in the embodiment.

The yoke 15 of Fig. 16A and the yokes 15 of Fig. 16B each constitute the cogging torque canceling unit 8. As described above, the yoke 15 of Fig. 16A reduces the production of the cogging torque in the first rotating body 2. More specifically, the yoke 15 cancels the cogging torque that would be produced in the first rotating body 2 by the moving body 5 in the absence of the yoke 15, and as a result, the yoke 15 reduces the production of the cogging torque in the first rotating body 2. Accordingly, the yoke 15 of Fig. 16A also serves as the cogging torque canceling unit 8.

As described above, in the first example, the yoke or yokes 15 are disposed so as to at least partially overlap the first permanent magnet 2a of the first rotating body 2, such that the production of the cogging torque in the first rotating body 2 can be reduced or the cogging torque produced in the first rotating body 2 by the moving body 5 can be canceled by the yoke or yokes 15.

< Second example not according to the invention >

In the second example, the second rotating body 4 separate from the first rotating body 2 is provided, and both the first rotating body 2 and the second rotating body 4 are disposed close to the moving body 5.

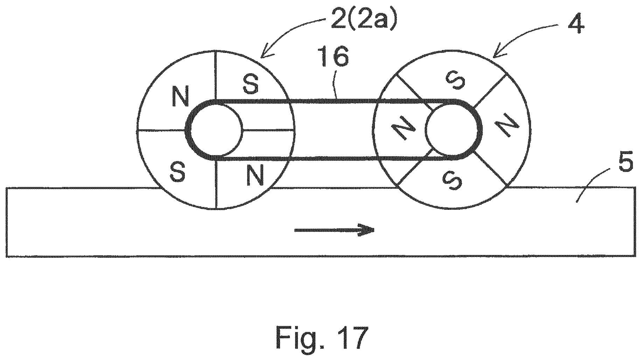

Fig. 17 schematically illustrates the second example. As shown in Fig. 17, the cogging torque canceling unit 8 of the second example includes the second rotating body 4 and a synchronous rotation mechanism. The second rotating body 4 is opposed at a distance to a main surface of the moving body 5, and includes the second permanent magnet 4a that rotates around a rotational shaft in accordance with the direction of rotation or movement of the moving body 5. The synchronous rotation mechanism causes the first rotating body 2 and the second rotating body 4 to rotate synchronously. Examples of the synchronous rotation mechanism include a timing belt 16 that stretches between the rotational shafts of the first rotating body 2 and the second rotating body 4. The synchronous rotation mechanism is not limited to the timing belt 16 but may be a gear or the like.

As shown in Fig. 17, the second rotating body 4 overlaps the moving body 5, as does the first rotating body 2. In the example shown in Fig. 17, the region of the first rotating body 2 overlapping the moving body 5 includes equal areas of N pole and S pole, whereas the region of the second rotating body 4 overlapping the moving body 5 includes a larger area of S pole than N pole. The second rotating body 4 is out of phase with the first rotating body 2 by 45°. Thus, the cogging torque produced in the first rotating body 2 by the moving body 5 can be canceled by the cogging torque produced in the second rotating body 4 by the moving body 5.

It is preferable that the first rotating body 2 and the second rotating body 4 are equal in diameter, number of magnetic poles, magnetic properties, and the gap with the moving body 5. Fig. 17 shows an example of the moving body 5 that is translated, but it is also possible that the moving body 5 is rotated.

As described above, in the second example, the first rotating body 2 and the second rotating body 4 overlap the moving body 5, and the first rotating body 2 and the second rotating body 4 rotate integrally with each other, and the orientation of the magnetic poles 2b of the first rotating body 2 is different from that of the magnetic poles 2b of the second rotating body 4. Therefore, the cogging torque produced in the first rotating body 2 by the moving body 5 can be canceled out by the cogging torque produced in the second rotating body 4.

< Third example not according to the invention >

In the embodiment and the first and second example described above, the side surface 5c of the moving body 5 is opposed to the first side surface 2d of the first rotating body 2. This arrangement between the moving body 5 and the first rotating body 2 is not limitative. The cogging torque canceling unit 8 described above can be applied to various rotary electric machines 10 in which the cogging torque is produced in the first rotating body 2 by movement or rotation of the moving body 5. Examples of the rotary electric machines 10 capable of installation of the cogging torque canceling unit 8 described above include the following.

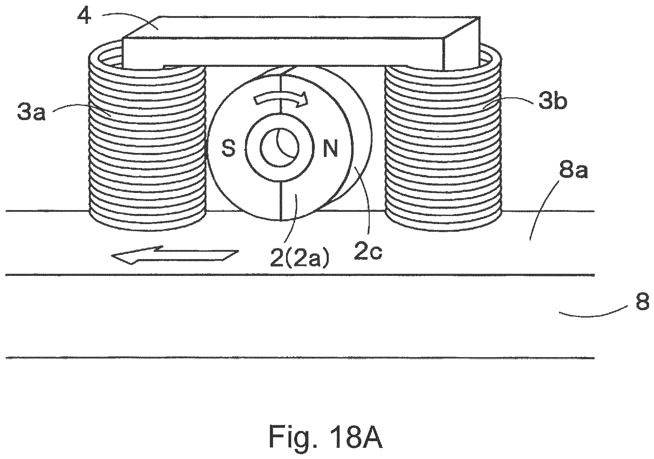

Fig. 18A shows a first example of the rotary electric machine 10 that can have the cogging torque canceling unit 8 installed thereto. The non-contact power generator 1 of Fig. 18A includes the first permanent magnet 2a that rotates around a rotational shaft, two coils 7 (a first coil 7a and a second coil 7b), and the yoke 15.

The first permanent magnet 2a is opposed at a distance to the main surface 5c of the moving body 5 that rotates or moves. The first permanent magnet 2a rotates in accordance with the direction of rotation or movement of the moving body 5. The first permanent magnet 2a includes at least two magnetic poles 2b that are magnetized in the direction normal to the outer peripheral surface of the first permanent magnet 2a.

The outer peripheral surface 2c of the first permanent magnet 2a is arranged at a distance from the main surface 5c of the moving body 5, and the first permanent magnet 2a is rotatable without contacting the main surface 5c of the moving body 5. In the example shown in Fig. 18A, the first coil 7a among the two coils 7 is positioned on the rear side of the first permanent magnet 2a with respect to the direction of rotation or movement of the moving body 5. The second coil 7b among the two coils 7 is positioned on the front side of the first permanent magnet 2a with respect to the direction of rotation or movement of the moving body 5. The first and second coils 7a, 7b are arranged at a distance from the main surface 5c of the moving body 5.

Further, in the example shown in Fig. 18A, the yoke 15 having a U-shape extends inside and above the first and second coils 7a, 7b. A gap is provided between the yoke 15 and the first permanent magnet 2a, as well as between the first permanent magnet 2a and the first and second coils 7a, 7b. These gaps are air gaps. Therefore, the first permanent magnet 2a rotates in a region surrounded by the main surface of the moving body 5, the first and second coils 7a, 7b, and the yoke 15.

When the first permanent magnet 2a is rotated clockwise or counterclockwise by 90° from the position shown in Fig. 18A, the N pole or the S pole is opposed to the moving body 5 at the minimum distance, making the magnetic path narrowest and the stability high. Therefore, in the structure shown in Fig. 18A, the cogging torque varies in accordance with the rotational position of the first permanent magnet 2a and, as in Fig. 1, it is possible that the first permanent magnet 2a undesirably does not rotate easily after the moving body 5 starts moving or rotating. Therefore, it is preferable to provide some kind of cogging torque canceling unit 8 described for the embodiment and the first and second example.

Fig. 18A shows a mere example of arrangement of the coils 7 that should be positioned in regions where all the magnetic flux from the first permanent magnet 2a concentrate. Further, the shape of the yoke 15 is not limited to that shown in Fig. 18A .

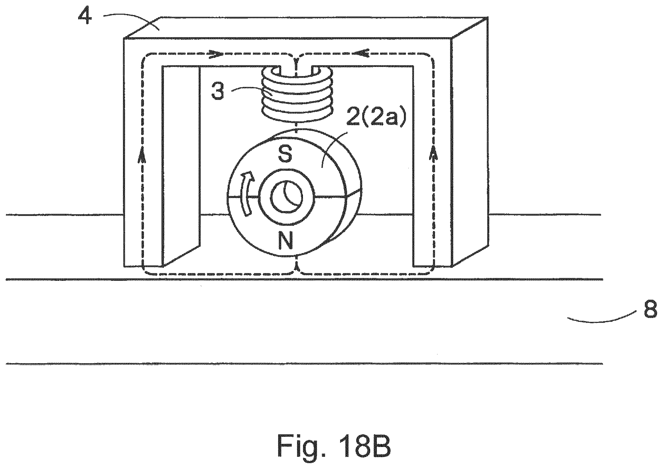

For example, Fig. 18B shows a second example of the rotary electric machine 10 that can have the cogging torque canceling unit 8 installed thereto. This example includes one coil 7 for power generation. The coil 7 is wound around the yoke 15 above the first permanent magnet 2a. The yoke 15 extends from above the first permanent magnet 2a toward both sides in the direction of movement of the moving body 5, so as to surround the first permanent magnet 2a. Since the coil 7 is linked with almost all the magnetic flux from the first permanent magnet 2a, it is not necessary to provide a plurality of coils 7. The coil 7 can be arranged at any position where all the magnetic flux from the first permanent magnet 2a concentrate (for example, the vicinity of at least one of the N-pole and the S-pole of the first permanent magnet 2a).

Since the cogging torque is produced in the first permanent magnet 2a of Fig. 18B by the movement of the moving body 5 in the same manner as in Fig. 18A, and therefore, it is preferable to provide some kind of cogging torque canceling unit 8 described for the embodiment and the first and second example.

Aspects of the invention are not limited to the foregoing embodiment and embrace various modifications provided that the modifications not departing from the scope of the claims.

## LIST OF REFERENCE NUMBERS

[0099]

1 non-contact power generator

2 first rotating body

2a first permanent magnet

2b magnetic poles

3 rotor

4 second rotating body

6 stator

7 coils

8 cogging torque canceling unit

9a rotational shaft

10 rotary electric machine

11 kinetic energy harvester

12 power generator

13 drive control unit

## Claims

1. A rotary electric machine, comprising:

   a first rotating body (2) opposed at a distance to a main surface of a moving body (5) made of a conductor that rotates or moves, the first rotating body (2) including a first permanent magnet (2a) configured to rotate around a first rotational shaft by Lorentz force created by eddy currents generated in a surface (5c)of the moving body (5); and
   a cogging torque canceling unit (8) for reducing or canceling out a cogging torque produced in the first permanent magnet (2a) depending on a relative relationship in shape and position between the moving body (5) and the first permanent magnet (2a),
wherein the cogging torque canceling unit (8) includes:

a second rotating body (4) having a second permanent magnet (4a) different from the first permanent magnet (2a), the second rotating body (4) being configured to rotate in synchronization with the first rotating body (2); and
a first magnetic body (6) magnetically coupled to the second permanent magnet (4a),
**characterized in that**
the cogging torque canceling unit (8) reduces the cogging torque by adjusting a gap between the second rotating body (4) and the first magnetic body (6).

2. The rotary electric machine of claim 1, wherein the cogging torque canceling unit (8) produces a cogging torque in inverse phase with the cogging torque produced in the first permanent magnet (2a) depending on the relative relationship in shape and position between the moving body and the first permanent magnet (2a).

3. The rotary electric machine of claim 1 or 2, wherein

the second rotating body (4) includes an annular member configured to rotate around the first rotational shaft along with the first permanent magnet (2a), and
the first magnetic body (6) is disposed on an inner peripheral side of the annular member and configured to reduce the cogging torque by adjusting a gap between the first magnetic body (6) and an inner peripheral surface of the annular member.

4. The rotary electric machine of any one of claims 1 to 3, further comprising one or more coils arranged at such positions as to be linked with magnetic flux from the second permanent magnet (4a), the one or more coils being configured to generate an induced current according to an amount of change of the magnetic flux linked with the one or more coils.

5. A non-contact power generator, comprising:

the rotary electric machine of any one of claims 1 to 4, and
a power generating unit for converting kinetic energy produced by rotation of the first rotating body (2) into electric energy,
wherein the power generating unit includes the cogging torque canceling unit.

**Patentansprüche**

1. Elektrische Drehmaschine, mit:

einem ersten rotierenden Körper (2), der mit Abstand einer Hauptoberfläche eines aus einem Leiter hergestellten beweglichen Körpers (5) gegenüberliegt und sich dreht oder bewegt, wobei der erste rotierende Körper (2) einen ersten Permanentmagneten (2a) aufweist, der ausgebildet ist, sich um eine erste Drehachse durch Lorentz-Kraft zu drehen, die durch Wirbelströme hervorgerufen wird, die in einer Oberfläche (5c) des beweglichen Körpers (5) erzeugt werden; und
einer Rastmomentausgleichseinheit (8) zum Reduzieren oder Eliminieren eines Rastmoments, das in dem ersten Permanentmagneten (2a) abhängig von einer relativen Beziehung in Form und Lage zwischen dem beweglichen Körper (5) und dem ersten Permanentmagneten (2a) hervorgerufen wird,
wobei die Rastmomentausgleichseinheit (8) aufweist:

einen zweiten rotierenden Körper (4) mit einem zweiten Permanentmagneten (4a), der sich von dem ersten Permanentmagneten (2a) unterscheidet, wobei der zweite rotierende Körper (4) ausgebildet ist, sich synchron zu dem ersten rotierenden Körper (2) zu drehen; und
einem ersten magnetischen Körper (6), der magnetisch mit dem zweiten Permanentmagneten (4a) gekoppelt ist,
**dadurch gekennzeichnet, dass**
die Rastmomentausgleichseinheit (8) das Rastmoment reduziert, indem ein Spalt zwischen dem zweiten rotierenden Körper (4) und dem ersten magnetischen Körper (6) verstellt wird.

**2.** Elektrische Drehmaschine nach Anspruch 1, wobei die Rastmomentausgleichseinheit (8) ein Rastmoment mit inverser Phase in Bezug auf das Rastmoment erzeugt, das in dem ersten Permanentmagneten (2a) abhängig von der relativen Beziehung in Form und Lage zwischen dem beweglichen Körper und dem ersten Permanentmagneten (2a) erzeugt wird.

**3.** Elektrische Drehmaschine nach Anspruch 1 oder 2, wobei

der zweite rotierende Körper (4) ein ringförmiges Element aufweist, das ausgebildet ist, sich zusammen mit dem ersten Permanentmagneten (2a) um die erste Drehachse zu drehen, und
der erste magnetische Körper (6) auf einer inneren peripheren Seite des ringförmigen Elements angeordnet und ausgebildet ist, das Rastmoment zu reduzieren, indem ein Spalt zwischen dem ersten magnetischen Körper (6) und einer inneren peripheren Oberfläche des ringförmigen Elements verstellt wird.

**4.** Elektrische Drehmaschine nach einem der Ansprüche 1 bis 3, die ferner eine oder mehrere Spulen aufweist, die an derartigen Positionen angeordnet sind, dass sie mit dem magnetischen Fluss aus dem zweiten Permanentmagneten (4a) gekoppelt sind, wobei die eine oder die mehreren Spulen ausgebildet sind, einen induzierten Strom entsprechend eines Änderungsbetrags des magnetischen Flusses, der mit der einen oder den mehreren Spulen verkettet ist, zu erzeugen.

**5.** Kontaktfreier Leistungsgenerator, mit:

einer elektrischen Drehmaschine nach einem der Ansprüche 1 bis 4, und
einer Leistungserzeugungseinheit zum Umwandeln von kinetischer Energie, die durch Drehung des ersten rotierenden Körpers (2) erzeugt wird, in elektrische Energie,
wobei die Leistungserzeugungseinheit die Rastmomentausgleichseinheit enthält.

## Revendications

**1.** Machine électrique rotative comprenant :

un premier corps rotatif (2) opposé, à une certaine distance, à une surface principale d'un corps mobile (5) réalisé avec un conducteur qui tourne ou se déplace, le premier corps rotatif (2) comprenant un premier aimant permanent (2a) configuré pour tourner autour d'un premier arbre rotatif par la force de Lorentz créée par des courants de Foucault générés dans une surface (5c) du corps mobile (5) ; et
une unité d'annulation de couple de crantage (8) pour réduire ou annuler un couple de crantage produit dans le premier aimant permanent (2a) en fonction d'une relation relative du point de vue de la forme et de la position entre le corps mobile (5) et le premier aimant permanent (2a),
dans laquelle l'unité d'annulation de couple de crantage (8) comprend :

un second corps rotatif (4) ayant un second aimant permanent (4a) différent du premier aimant permanent (2a), le second corps rotatif (4) étant configuré pour tourner en synchronisation avec le premier corps rotatif (2) ; et
un premier corps magnétique (6) couplé par voie magnétique au second aiment permanent (4a),
**caractérisée en ce que** :
l'unité d'annulation de couple de crantage (8) réduit le couple de crantage en ajustant un espace entre le second corps rotatif (4) et le premier corps magnétique (6).

**2.** Machine électrique rotative selon la revendication 1, dans laquelle l'unité d'annulation de couple de crantage (8) produit un couple de crantage en phase inverse avec le couple de crantage produit dans le premier aimant permanent (2a) en fonction de la relation relative du point de vue de la forme et de la position entre le corps mobile et le premier aimant permanent (2a) .

**3.** Machine électrique rotative selon la revendication 1 ou 2, dans laquelle :

le second corps rotatif (4) comprend un élément annulaire configuré pour tourner autour du premier arbre rotatif conjointement avec le premier aimant permanent (2a), et
le premier corps magnétique (6) est disposé sur un côté périphérique interne de l'élément annulaire et configuré pour réduire le couple de crantage en ajustant un espace entre le premier corps magnétique (6) et une surface périphérique interne de l'élément annulaire.

4. Machine électrique rotative selon l'une quelconque des revendications 1 à 3, comprenant en outre une ou plusieurs bobines agencées dans des positions telles qu'elles sont liées au flux magnétique du second aimant permanent (4a), les une ou plusieurs bobines étant configurées pour générer un courant induit en fonction d'une quantité de changement du flux magnétique lié à la ou aux bobines.

5. Générateur d'énergie électrique sans contact comprenant :

la machine électrique rotative selon l'une quelconque des revendications 1 à 4, et
une unité de génération d'énergie électrique pour convertir l'énergie cinétique produite par la rotation du premier corps rotatif (2) en énergie électrique,
dans lequel l'unité de génération d'énergie électrique comprend l'unité d'annulation de couple de crantage.

Fig. 1

Fig. 2

Fig. 3

Fig. 4

P1 = T1 ω1

N S N

Power Generator

Drive Control Unit

Load

5 · 2 · 12 · 13 · 14

Fig. 5

Fig. 6

Fig. 7

Fig. 8A

4

6(6a)

Fig. 8B

| Parameter | Variable | Value |
|---|---|---|
| Inner diameter of power generator | $d_1$ | 67mm |
| Height of second permanent magnet | $h_{PM}$ | 1.5mm |
| Diameter of two-dimensional rotor | $d_{rot,Aeq}$ | 120mm |
| Actual diameter of rotor | $d_{rot}$ | 75mm |
| Material of stator | | M235-35A |
| Magnetic permeability of rotor | $\mu_{rot,rel}$ | 700 |
| Width of stator | $l_y$ | 10mm |
| Number of magnetic pole pairs | $p$ | 2 |
| Number of phases | $m$ | 3 |
| Nominal air gap | $g_{nom}$ | 2mm |
| Remaining magnetic flux density of second permanent magnet | $B_r$ | 1.4T |
| Magnetic permeability of second permanent magnet | $\mu_{PM,rel}$ | 1.05 |
| Width of stator teeth | $w_{FE}$ | 10mm |

## Fig. 9

Fig. 10

Fig. 11

| Parameter | Initial Value | Optimal Value |
|---|---|---|
| $\alpha_{FE}$ | 60° | 59.7° |
| $\alpha_{PMgap}$ | 45° | 54.4° |
| $a_1$ | 0.5 | 0.5 |
| $b_1$ | 0 | 0.0056 |
| $a_2$ | 0 | 0.0245 |
| $b_2$ | 0 | 0.0021 |
| $a_3$ | 0 | 0.0388 |
| $b_3$ | 0 | 0.0073 |
| $a_4$ | 0 | −0.0356 |
| $b_4$ | 0 | 0.0057 |
| $a_5$ | 0 | −0.0657 |
| $b_5$ | 0 | 0.0020 |
| $a_6$ | 0 | −0.0161 |
| $b_6$ | 0 | 0.003 |
| $a_{i>6}$, $b_{i>6}$ | 0 | 0 |

Fig. 12

Fig. 13

Fig. 14

Fig. 15A

N    S

S    N

2(2a)

5          15

Fig. 15B

Fig. 16A

Fig. 16B

Fig. 17

Fig. 18A

Fig. 18B

**EP 3 490 121 B1**

**REFERENCES CITED IN THE DESCRIPTION**

**Patent documents cited in the description**

- US 20140132155
- US 2014085914 A1
- US 2014346777 A1
- US 2013328429 A1